# EUROPEAN PATENT APPLICATION

(11) **EP 2 070 846 A1**
(43) Date of publication of application: **17.06.2009**
(21) Application number: 08170941.2
(22) Date of filing: 08.12.2008
(51) Int. Cl.: B65G 47/14

(54) **Method and device for removing a tubular profile from a supply of tubular profiles**

(30) Priority: 06.12.2007 NL 1034795
(71) Applicant: Bend Holding B.V., 7602 BR Almelo (NL)
(72) Inventor: Scholten, Johannes Theodorus, 7602 BR Almelo (NL)
(74) Representative: Bakker, Hendrik

(57) **Abstract**

The invention relates to a method and device for removing a profile (2) from a supply of profiles stacked in a silo (7). Using a camera (12) an image is here recorded of one outer end of the stacked supply, after which one outer end of one profile is selected in the image. This outer end is then taken hold of by an automatically operating device and the profile is pulled in a longitudinal direction out of the supply.

## Description

The invention relates to a method for removing a tubular profile from a stacked supply of tubular profiles stored in a silo. The method is for instance applied in combination with an automated bending process, wherein tubular profiles must be fed continuously to a tube bender. According to the prior art a silo is generally embodied as a bundle magazine out of which a tubular profile is rolled laterally. The problem is that it is precisely in automated processes that increasingly longer tubular profiles are being used, for instance in order to minimize the amount of waste produced. The tubular profiles can here have a length of some tens of meters. There is then a real danger during filling of the silo of the profiles landing twisted together in the silo, wherein the prior art method no longer suffices.

The method according to the invention obviates this drawback and has the feature that using a camera an image is recorded of one outer end of the stacked supply, that one outer end of one tubular profile is selected in the image, that this outer end is taken hold of by an automatically operating device and pulled in a longitudinal direction out of the supply. It is no longer important here whether the tubular profiles lie mutually parallel in the silo.

A favourable realization of the inventive method, wherein a selected tubular profile can always be pulled from the supply without difficulty, has the feature that an upper layer of tubular profiles is detected in the image and that the uppermost tubular profile in this upper layer is selected.

A further favourable realization has the feature that the automatically operating device takes hold of the selected tubular profile on an inner side, for instance with an expanding cone. It is therefore possible to pull a tubular profile from the supply when the outer end is situated between adjacent tubular profiles.

A further favourable realization has the feature that around the tubular profile pulled partially out of the supply are placed two driven rollers which pull the tubular profile wholly out of the silo.

A further favourable realization has the feature that the selected tubular profile subsequently drops onto a sloping track and rolls to an intermediate store.

The invention also relates to a device for removing a tubular profile from a supply of tubular profiles, comprising a trough-like silo in which the supply of tubular profiles is accommodated, and an automatically operating device for taking hold of precisely one tubular profile, and transport means for discharging this profile. The inventive device has the feature that the automatically operating device is provided with a camera and an image processor for the purpose of selecting one tubular profile lying in the silo, and that the automatically operating device is also provided with a clamping device for clamping the selected tubular profile and pulling the selected profile at least partially out of the silo in a longitudinal direction. It is possible in this way to remove very long tubular profiles from the silo, even if the tubular profiles lie non-parallel and mutually entangled in the silo.

A favourable embodiment has the feature that the image processor is programmed to select a tubular profile situated in or on an upper layer of tubular profiles in the silo.

A further favourable embodiment has the feature that the clamping device is adapted to clamp the selected tubular profile on an inner side, for instance using an expanding cone. It is therefore possible to pull a tubular profile out of the supply if the outer end is situated between adjacent tubular profiles.

A further favourable embodiment has the feature that the transport means comprise at least two driven rollers which can be placed around the selected tubular profile and subsequently pull this profile wholly out of the silo.
A further favourable embodiment has the feature that the transport means also comprise a sloping track via which the selected tubular profile rolls to an intermediate store. The selected tubular profile can then be carried in per se known manner out of this intermediate store to for instance an automatic welding machine or a tube bender.

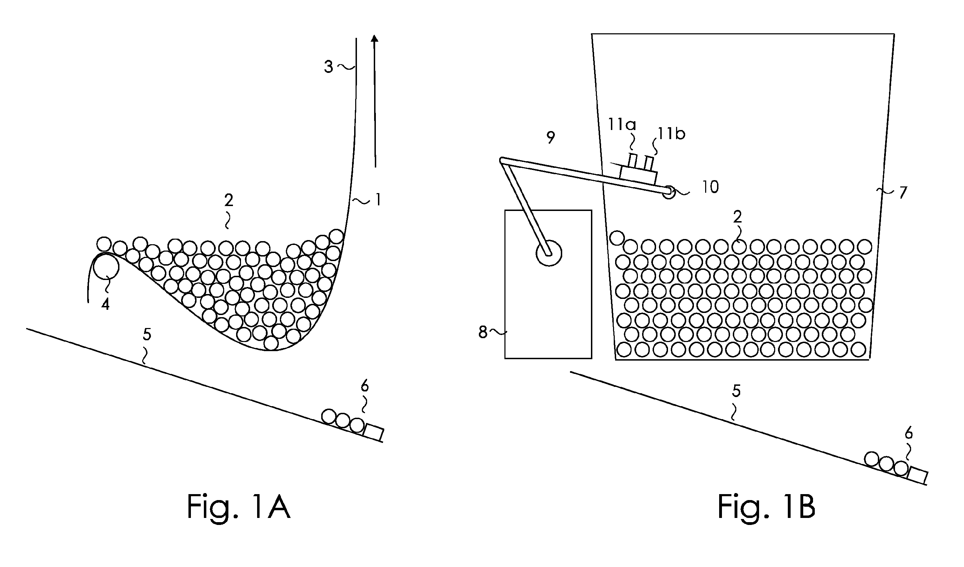

The invention will now be further elucidated on the basis of the following figures, wherein
- Fig. 1A: shows a schematic front view of a prior art device;
- Fig. 1 B: shows a schematic front view of a possible embodiment of a device according to the invention;
- Fig.: 2shows a top view of this embodiment in more detail;
- Fig.: 3shows schematically the algorithm used for the image processor.

Fig. 1A shows a schematic front view of a prior art device consisting of a bundle magazine 1 in which tubes 2 lie stacked and an outer end 3 of which can be raised. At a given moment a tube 2 will roll over an edge supported by a profile 4 and land on a sloping track 5, after which tube 2 rolls on until it reaches an intermediate store 6, from where it is discharged to its destination.

Fig. 1B shows a schematic front view of a possible embodiment of a device according to the invention, consisting of a trough-like silo 7 in which tubes 2 lie stacked. The front wall is omitted from silo 7, and disposed adjacently of silo 7 is a robot 8 provided with an arm 9 on which are mounted an expanding cone 10 and a pair of driven rollers 11a, 11b. Expanding cone 10 is pressed into an outer end of a tube 2 and expanded. Robot 8 can then pull tube 2 partially out of silo 7 in a lengthwise direction. Driven rollers 11a, 11b are subsequently placed around tube 2, and tube 2 is pulled wholly out of silo 7. Tube 2 now lands on a sloping track 5, after which it rolls further until it reaches an intermediate store 6, from where it is discharged to its destination.

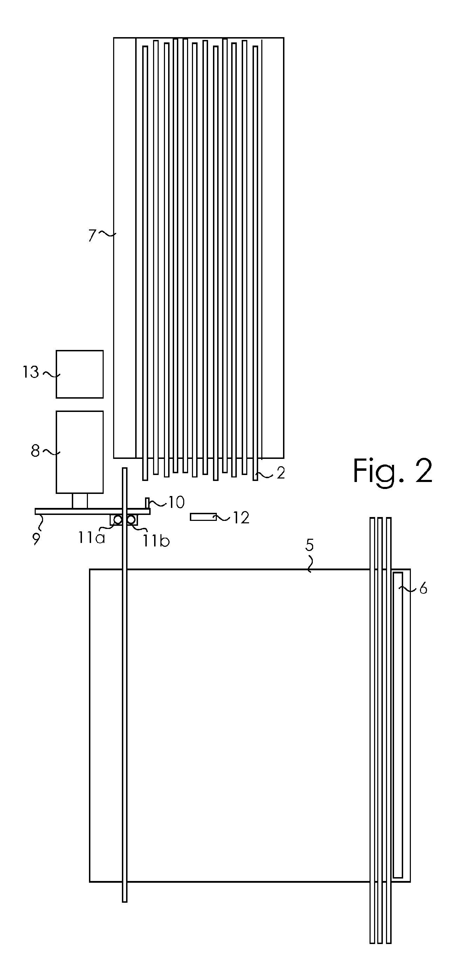

Fig. 2 shows a top view of this embodiment in more detail, with silo 7 in which tubes 2 lie stacked, with robot 8, expanding cone 10 and driven rollers 11 a, 11 b. Placed in front of silo 7 is a camera 12 which is connected to an image processor 13. Camera 12 sends a recent image to image processor 13, which selects a tube 2 and actuates robot 8 such that expanding cone 10 can be inserted therein and expanded. Once selected tube 2 has been pulled partially out of silo 7, image processor 13 then actuates robot 8 such that driven rollers 11 a, 11 b are placed around selected tube 2, after which this tube is pulled wholly out of silo 7. Selected tube 2 now lands on a sloping track 5, after which it rolls further until it reaches intermediate store 6, from where it is discharged to its destination.

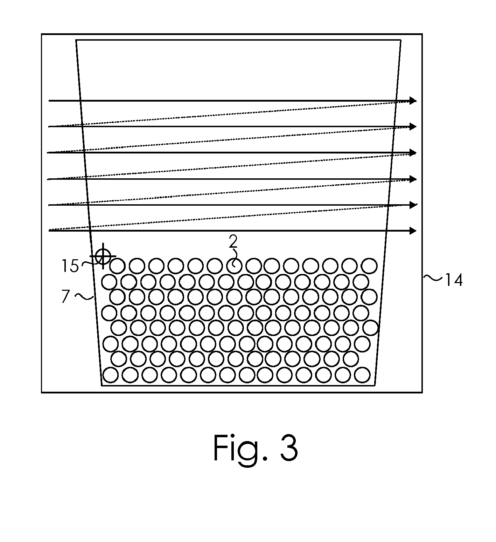

Fig. 3 shows schematically the algorithm used for the image processor. The tubes protrude to some extent out of silo 7 and are illuminated by a lamp (not shown) disposed adjacently of camera 12. In the image 14 obtained using camera 12 a search operation is performed from left to right, a row lower each time, on the basis of differences in intensity. When the search operation is performed, points representing the wall of silo 7 are disregarded. As soon as a point with a relatively high intensity is detected, a search is made around this point in per se known manner for a circular object of a known diameter. The coordinates of the centre 15 of this object are determined. Expanding cone 10 is sent to these coordinates. In this way the uppermost tube, which may be assumed not to be entangled with other tubes, or hardly so, is always pulled out of silo 7. This reduces the chance of disruption. It also reduces the chance of buckling of the tube and of damage to the wall of the tube.

## Claims

1. Method for removing a tubular profile from a stacked supply of tubular profiles stored in a silo, **characterized in that** using a camera an image is recorded of one outer end of the stacked supply, that one outer end of one tubular profile is selected in the image, that this outer end is taken hold of by an automatically operating device and pulled in a longitudinal direction out of the supply.

2. Method as claimed in claim 1, **characterized in that** an upper layer of tubular profiles is detected in the image and that the uppermost tubular profile in this upper layer is selected.

3. Method as claimed in claim 2, **characterized in that** the automatically operating device takes hold of the selected tubular profile on an inner side.

4. Method as claimed in any of the foregoing claims, **characterized in that** around the tubular profile pulled partially out of the supply are placed two driven rollers which pull the tubular profile wholly out of the silo.

5. Method as claimed in claim 4, **characterized in that** the selected tubular profile subsequently drops onto a sloping track and rolls to an intermediate store.

6. Device for removing a tubular profile from a supply of tubular profiles, comprising a trough-like silo in which the supply of tubular profiles is accommodated, and an automatically operating device for selecting precisely one tubular profile, and transport means for discharging this profile, **characterized in that** the automatically operating device is provided with a camera and an image processor for the purpose of selecting one tubular profile lying in the silo, and that the automatically operating device is also provided with a clamping device for clamping the selected tubular profile and pulling the selected profile at least partially out of the silo in a longitudinal direction.

7. Device as claimed in claim 6, **characterized in that** the image processor is programmed to select a tubular profile situated in or on an upper layer of tubular profiles in the silo.

8. Device as claimed in claim 7, **characterized in that** the clamping device is adapted to clamp the selected tubular profile on an inner side.

9. Device as claimed in claim 8, **characterized in that** the transport means comprise at least two driven rollers.

10. Device as claimed in claim 9, **characterized in that** the transport means also comprise a sloping track via which the selected tubular profile rolls to an intermediate store.
